# EUROPEAN PATENT APPLICATION

(11) **EP 1 357 696 A1**
(43) Date of publication of application: **29.10.2003**
(21) Application number: 02252834.3
(22) Date of filing: 23.04.2002
(51) Int. Cl.: H04L 1/20, H04B 7/005, H04L 1/16

(54) **Method to measure the Block Error Rate in a radio telecommunications network**

(71) Applicant: LUCENT TECHNOLOGIES INC., Murray Hill, New Jersey 07974-0636 (US)
(72) Inventor: Cao, Qiang, Swindon, Wiltshire SN2 3XL (GB); Charriere, Patrick, Tetbury, Gloucestershire GL8 8DR (GB); Lim, Seau Sian, Swindon, Wiltshire SN1 3JJ (GB); Sapiano, Philip Charles, Corsham, Wiltshire SN13 9AY (GB)
(74) Representative: Sarup, David Alexander

(57) **Abstract**

A radio telecommunications network comprises a first station and a second station. The first station is operative to send blocks of data to the second station. The second station is operative to receive the data and send to the first station indicators of which blocks of data from the first station have been accurately received. The first station comprises determining means operative to determine from the indicators a value dependent upon the proportion of the blocks of data sent to the second station which were not accurately received.

## Description

### Technical Field

The present invention relates to a radio telecommunications network, a method of sending blocks of data from a first station to the second station in a radio telecommunications network, a radio telecommunications station, and a method of sending blocks of data from a radio telecommunications station.

### Background of the Invention

In radio telecommunications connections, one of things most widely measured to determine the quality of the radio link is Block Error Rate (BLER). Block error rate is the ratio between the number of erroneous radio blocks received and the total number of transmitted radio blocks. Its value ranges between 0 and 100%. The lower the value of BLER, the better the quality of the radio link.

A traditional way of measuring BLER measurement is for the receiving device to count the number Nₑᵣᵣₒᵣ of erroneous blocks received over a period corresponding to the reception of the last N_{window} blocks. N_{window} is a number called the measurement window size. The BLER value is then calculated as Nₑᵣᵣₒᵣ / N_{window}. The value is reported back to the transmitter be either periodically, or when greater than a threshold.

In radio telecommunications systems in accordance with Third Generation Partnership Project 3GPP Universal Mobile Telecommunications System UMTS standards, UMTS Technical Specification 25.331 specifies the only method available for reporting of downlink BLER In UMTS systems the reporting of BLER measurements from a mobile user terminal back to the radio network infrastructure, namely a base station (NodeB) under the control of a radio network controller RNC can only be achieved by the use of alarms. Alarms are threshold based indicators triggered when the radio link quality falls below a level specified by the network infrastructure. There is no possibility for periodic reporting back to the transmitter of BLER measurements, or, e.g. requesting the reporting of events to the network where the BLER is better than the alarm threshold e.g. if the radio quality becomes better than expected . In consequence as the transmitter lacks this feedback, some radio resource is wasted, for example higher than necessary transmit powers can be used resulting in more interference than necessary.

### Summary of the Invention

The present invention provides a radio telecommunications network comprising a first station and a second station, the first station being operative to send blocks of data to the second station, the second station being operative to receive the data and send to the first station indicators of which blocks of data from the first station have been accurately received, the first station comprising determining means operative to determine from the indicators a value dependent upon the proportion of the blocks of data sent to the second station which were not accurately received.

The significant advantages of preferred embodiments of determining block error rate at the transmitter from acknowledgment reports sent anyway are that this both simplifies the receiver structure and saves on reporting bandwidth. There is no determination and reporting of BLER values to be made by the receiver back to the transmitter, hence significant uplink radio resource is saved.

Preferably the value is an estimate of the number of blocks received with one or more errors divided by the total number of blocks transmitted.

Preferably the network is a Universal Mobile Telecommunications System UMTS radio telecommunications network. Preferred embodiments advantageously provides a way for the monitoring of the downlink BLER in a UMTS system. A simple to implement and efficient way of monitoring the downlink block error rate is provided suitable for use in a UMTS system.

Furthermore preferably the first station is a base station and the second station is a mobile user terminal.

Preferably the indicators comprise acknowledgements (Ack) of accurate receipt by the second station. Preferably the indicators comprise acknowledgements (Nack) of non- receipt or inaccurate receipt by the second station. Furthermore preferably the indicators also comprise report-awaited indicators.

Preferably the transmitter is operative to retransmit at least some of the data which the indicators indicate has not accurately received.

Preferably the value is redetermined periodically by the determining means to take account of newly received indicators. Preferably transmit power level is adjusted so as to keep the value within a predetermined range. Preferred embodiments thus have advantages of good transmit power control for efficient resource usage without the need for additional signalling to inform the first station of a (e.g BLER)value.

Preferably for determining the value(s) a record is kept of the indicator received for each block sent or at least each of the last n blocks sent where n is a predetermined number.

The present invention also provides a method of sending blocks of data from a first station to the second station in a radio telecommunications network, the second station receiving the data and sending to the first station indicators of which blocks of data from the first station have been accurately received, the first station determining from the indicators a value dependent upon the proportion of the blocks of data sent to the second station which were not accurately received.

The present invention also provides a radio telecommunications station operative to send blocks of data and to receive indicators of which blocks of data have been accurately received, the station comprising determining means operative to determine from the indicators a value dependent upon the proportion of the blocks of data sent which were not accurately received.

Furthermore the present invention also provides a method of sending blocks of data from a radio telecommunications station comprising the station receiving indicators of which blocks of data have been accurately received, the station determining from the indicators a value dependent upon the proportion of the blocks of data sent which were not accurately received.

### Brief Description of the Drawings

A preferred embodiment of the present invention will now be described by way of example and with reference to the drawings, in which:
Figure 1 is a diagram illustrating a known radio telecommunications system (prior art), and
Figure 2 is a diagram illustrating a radio telecommunications system according to the present invention.

### Detailed Description

An example is now described involving radio bearers (channels) between a transmitter and receiver using a data retransmission mechanism.

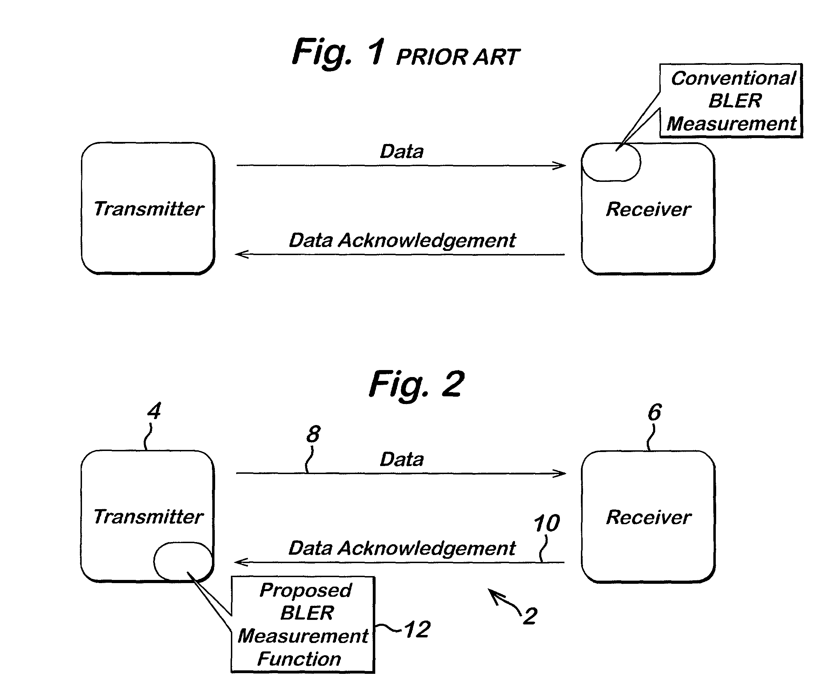

As shown in Figure 2, in a UMTS radio telecommunications network, a transmitter 4, such as a base station (NodeB) under the control of a radio network controller (RNC, not shown) communicates with receivers 6, such as mobile user terminals. For simplicity, only one receiver 6 is shown in Figure 2.

Each receiver 2 in call connection with the transmitter 4 receives data 8 in the form of data blocks carried in data packets by radio from the transmitter 4. This occurs over a downlink radio bearer (channel). The receiver sends acknowledgements 10 of receipt of the data 8 and other data (not shown) over an uplink radio channel to the transmitter 4. The transmitter 4 and the receiver 6 cooperate in a retransmission mechanism so as to provide a suitably low overall block error rate (i.e a high reliability of the data 8 transmission). A suitable transmission scheme is known as acknowledge mode AM and is such that retransmission of a data packet only stops once an acknowledgement 10 of correct receipt is received back by the transmitter 4.

Regardless of the particular method used for BLER measurement, when the data retransmission mechanism is activated by the transmitter 4 (i.e. the radio network i.e the base station), the receiver 6 (i.e. the mobile user terminal reports to the transmitter 4 the identity of the data blocks that have not been received correctly. These data blocks are subsequently retransmitted by the transmitter 4.

The basic idea use the acknowledgements 10 as feedback information of which blocks are received with one or more errors to derive an estimate of BLER of the radio link. The BLER estimates are useful feedback information to improve performance, for example if too high transmit power is increased; if too low, transmit powers are excessive (resulting in unnecessary interference, blockage of other users etc) so are reduced.

A BLER value can be determined in a number of ways. A possible BLER measurement function 12 at the transmitter 4 involves the maintenance at the transmitter 4 of the history of the transmitted blocks and their associated status: received, not received, or waiting a report. This history is then used to calculate a block error rate value, for example by inspecting the last x number of entries in the history to provide an estimate of BLER.

In another embodiment (not shown), the transmitter is a mobile user terminal and the receiver is a base station.

## Claims

1. A radio telecommunications network comprising a first station and a second station, the first station being operative to send blocks of data to the second station, the second station being operative to receive the data and send to the first station indicators of which blocks of data from the first station have been accurately received, the first station comprising determining means operative to determine from the indicators a value dependent upon the proportion of the blocks of data sent to the second station which were not accurately received.

2. A radio telecommunications network according to claim 1, in which the value is an estimate of the number of blocks received with one or more errors divided by the total number of blocks transmitted.

3. A radio telecommunications network according to claim 1 or claim 2, in which the network is a Universal Mobile Telecommunications System UMTS radio telecommunications network.

4. A radio telecommunications network according to any preceding claim, in which the indicators comprise acknowledgements (Ack) of accurate receipt by the second station.

5. A radio telecommunications network according to any preceding claim, in which the indicators comprise acknowledgements (Nack) of non- receipt or inaccurate receipt by the second station.

6. A radio telecommunications network according to any preceding claim, in which the transmitter is operative to retransmit at least some of the data which the indicators indicate has not accurately received.

7. A radio telecommunications network according to any preceding claim, in which the value is redetermined periodically by the determining means to take account of newly received indicators, and in which transmit power level is adjusted so as to keep the value within a predetermined range.

8. A radio telecommunications network according to any preceding claim, in which for determining the value(s) a record is kept of the indicator received for each block sent or at least each of the last n blocks sent where n is a predetermined number.

9. A method of sending blocks of data from a first station to the second station in a radio telecommunications network, the second station receiving the data and sending to the first station indicators of which blocks of data from the first station have been accurately received, the first station determining from the indicators a value dependent upon the proportion of the blocks of data sent to the second station which were not accurately received.

10. A radio telecommunications station operative to send blocks of data and to receive indicators of which blocks of data have been accurately received, the station comprising determining means operative to determine from the indicators a value dependent upon the proportion of the blocks of data sent which were not accurately received.
